# DEMANDE DE BREVET EUROPEEN

(11) **EP 0 838 927 A1**
(43) Date de publication de la demande: **29.04.1998**
(21) Numéro de dépôt: 97402449.9
(22) Date de dépôt: 16.10.1997
(51) Int. Cl.: H04L 27/20, H04L 27/36

(54) **Estimateur du défaut de balance d'un modulateur en quadrature et étage de modulation l'utilisant**

(30) Priorité: 24.10.1996 FR 9612977
(71) Demandeur: ALCATEL ALSTHOM COMPAGNIE GENERALE D'ELECTRICITE, 75008 Paris (FR)
(72) Inventeur: Marchesani, Rossano, 66100 Chieti (IT); Canonici, Jean-Xavier, 92200 Neuilly (FR)
(74) Mandataire: Scheer, Luc

(57) **Abrégé**

L'invention concerne notamment un estimateur (24) du défaut de balance d'un modulateur en quadrature, cet estimateur pouvant être utilisé pour corriger de manière auto-adaptative ce défaut et comprenant deux mélangeurs (20,21) auxquels sont appliqués deux signaux porteurs (P1,P2) ainsi qu'à chacun des mélangeurs (20,21) un signal modulant (X,Y). Les signaux de sortie des mélangeurs (20,21) sont appliqués à un sommateur (23) pour constituer un signal modulé (S).

Selon l'invention, cet estimateur (24) comporte :
- des moyens (25) de détection de la puissance instantanée du signal modulé (S) ;
- des moyens de multiplication (26,27) de la puissance instantanée détectée (P_{d}) par les signaux modulants (X,Y), les moyens de multiplication (26,27) fournissant des signaux produits ;
- des moyens de redressement (28A,29A) des signaux produits ;
- des moyens d'intégration (30,31) des signaux produits redressés fournissant des signaux (E1,E2) indicatifs du défaut de balance du modulateur.

L'estimateur est réalisé sous forme soit analogique soit numérique.

## Description

Le domaine de l'invention est celui des émetteurs de signaux à 2ⁿ états de phase, obtenus par modulation par déplacement de phase (MDP-M, modulation de phase à M états) ou par modulation d'amplitude et de phase (MDAP-M, modulation d'amplitude et de phase à M états).

L'invention concerne plus précisément un estimateur d'un défaut de balance d'un modulateur en quadrature comprenant deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé. Les signaux porteurs sont en quadrature de phase et sont soit à une fréquence intermédiaire (modulation Fl), soit à une fréquence porteuse (modulation directe).

L'invention a notamment pour objet un estimateur pouvant être utilisé dans une boucle d'asservissement pour modifier l'écart d'amplitude des signaux de sortie des mélangeurs (estimateur de balance destiné à estimer l'amplitude relative des deux voies). L'invention trouve un intérêt tout particulier pour le contrôle d'un étage de modulation fonctionnant dans une large bande de fréquences.

La demande de brevet européen n°0.503.588 décrit un estimateur d'un défaut de balance d'un modulateur de signaux en quadrature de phase. L'inconvénient de cet estimateur est qu'il nécessite l'utilisation d'une séquence d'apprentissage pour estimer ce défaut de balance et que la correction du modulateur n'est pas auto-adaptative.

On connaît également, par la demande de brevet français n°2.729.261 un estimateur d'un défaut d'un modulateur en quadrature.

Dans cette demande, le modulateur en quadrature comprend deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé.

L'estimateur comporte quant à lui :
- des moyens de détection de la puissance instantanée du signal modulé ;
- des moyens de multiplication de la puissance instantanée détectée par l'un au moins des signaux modulants ;
- des moyens d'intégration du résultat de cette multiplication, les moyens d'intégration fournissant un signal indicatif du défaut de fonctionnement du modulateur.

Le défaut estimé est soit un défaut de quadrature, soit un résidu de porteuse dans le signal modulé

Lorsque le défaut de fonctionnement du modulateur est un défaut de quadrature entre les signaux issus des mélangeurs, les moyens de multiplication multiplient la puissance instantanée détectée par les signaux modulants pour fournir, après intégration, un signal représentatif de l'écart de phase entre les signaux issus des mélangeurs.

Lorsque le défaut de fonctionnement du modulateur est un résidu des signaux porteurs dans le signal modulé, les moyens de multiplication multiplient la puissance instantanée par chacun des signaux modulants pour fournir, après intégration, deux signaux représentatifs du résidu de signaux porteurs dans le signal modulé.

Ce document ne propose cependant pas de solution pour corriger un défaut de balance.

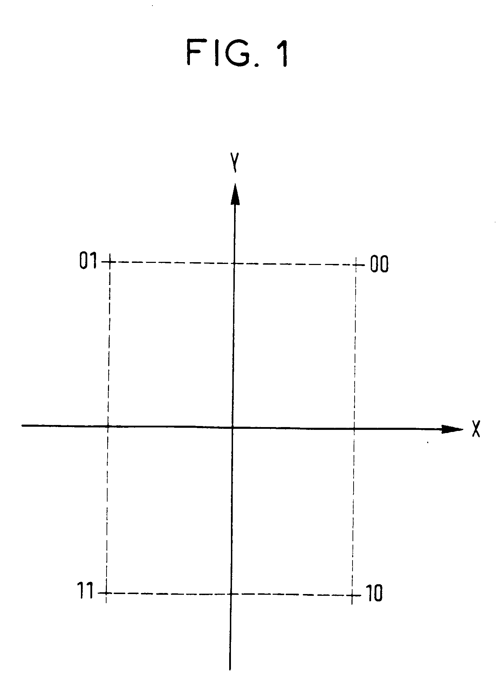

La figure 1 représente une constellation d'un signal modulé en MDP-4 issu d'un modulateur présentant un défaut de balance.

Dans le cas d'une modulation à 2ⁿ états de phase, si l'on veut réaliser une représentation de type coordonnées cartésiennes dans un espace de signaux, on peut placer les 2ⁿ états de phase de façon équi-répartie par rapport à des axes correspondant à des signaux porteurs orthogonaux X et Y. On obtient alors une constellation qui correspond à la représentation vectorielle des états de signaux porteurs dont les projections sur les axes X et Y donnent les coordonnées de l'extrémité du vecteur représenté.

Lorsque le modulateur présente un défaut de balance, la constellation est telle que représentée à cette figure 1, du fait de la différence d'amplitude entre les voies X et Y. On observe dans ce cas une dégradation des performances de l'émetteur.

La présente invention a notamment pour objectif de remédier à ces inconvénients.

Plus précisément, un des objectifs de l'invention est de fournir un estimateur d'un défaut de balance d'un modulateur en quadrature, cet estimateur pouvant être utilisé pour corriger de manière auto-adaptative ce défaut. L'estimateur doit notamment pouvoir être utilisé dans un modulateur en quadrature fonctionnant dans une large bande de fréquences.

Cet objectif, ainsi que d'autres qui apparaîtront par la suite, est notamment atteint grâce à un estimateur du défaut de balance d'un modulateur en quadrature comprenant deux mélangeurs auxquels sont appliqués deux signaux porteurs ainsi qu'à chacun des mélangeurs un signal modulant, les signaux de sortie des mélangeurs étant appliqués à un sommateur pour constituer un signal modulé, cet estimateur comportant :
- des moyens de détection de la puissance instantanée du signal modulé ;
- des moyens de multiplication de la puissance instantanée détectée par les signaux modulants, les moyens de multiplication fournissant des signaux produits ;
- des moyens de redressement des signaux produits ;
- des moyens d'intégration des signaux produits redressés fournissant des signaux indicatifs du défaut de balance du modulateur.

L'invention concerne également un modulateur en quadrature coopérant avec un tel estimateur.

D'autres caractéristiques et avantages de l'invention apparaîtront à la lecture de la description suivante de deux modes de réalisation préférentiels, donnés à titre illustratif et non limitatif, et des dessins annexés, dans lesquels :
- la figure 1 représente une constellation d'un signal modulé en MDP-4 issu d'un modulateur présentant un défaut de balance ;
- la figure 2 représente un modulateur en quadrature piloté par un estimateur de défaut de balance selon l'invention ;
- la figure 3 représente un autre mode de réalisation d'un estimateur d'un défaut de balance selon l'invention ;
- la figure 4 représente un autre modulateur en quadrature pouvant être piloté par un estimateur d'erreur de balance.

La figure 1 a été décrite précédemment en référence à l'état de la technique.

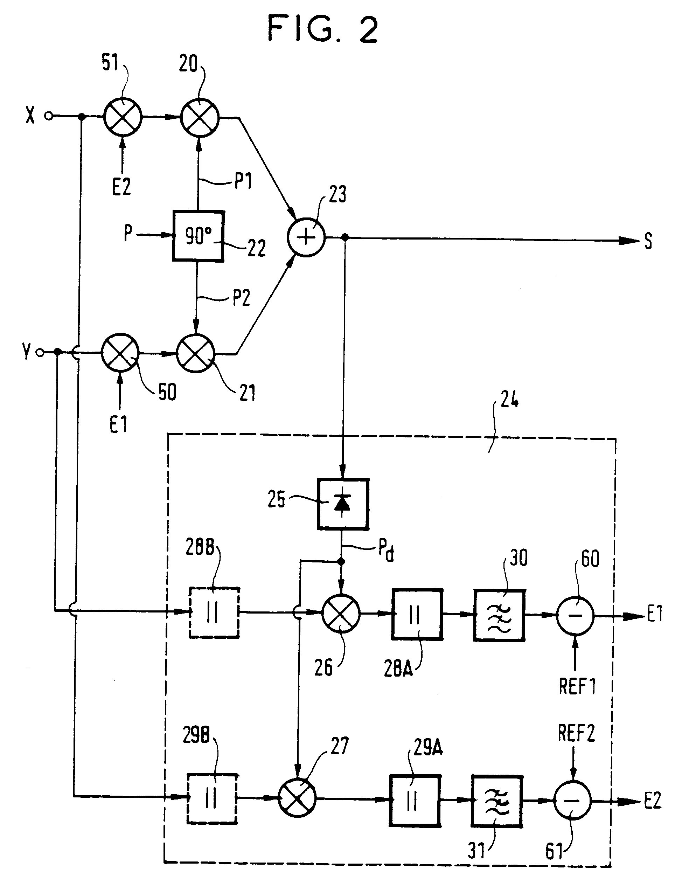

La figure 2 représente un modulateur en quadrature piloté par un estimateur de défaut de balance selon l'invention. L'estimateur est ici entièrement réalisé sous forme analogique.

Le modulateur en quadrature représenté comporte de manière classique deux mélangeurs 20, 21 auxquels sont appliqués deux signaux porteurs P1 et P2 obtenus à partir d'un signal porteur P issu d'un oscillateur local et à partir d'un déphaseur de 90° référencé 22. A chacun des mélangeurs 20, 21 est appliqué un signal modulant X, Y (par l'intermédiaire de multiplieurs 50, 51 décrits par la suite). Les signaux de sortie des mélangeurs 20, 21 sont appliqués à un sommateur 23 pour constituer un signal modulé S. Ce signal modulé S est soit en fréquence intermédiaire, soit en hyperfréquences.

L'estimateur de l'invention, généralement référencé par 24, comporte :
- des moyens 25 de détection de la puissance instantanée P_{d} du signal modulé S ;
- des moyens de multiplication 26, 27 de la puissance instantanée P_{d} détectée par chacun des signaux modulants X, Y ;
- des moyens de redressement 28A, 29A des signaux produits, ces moyens de redressement pouvant être réalisés sous la forme de diodes ;
- des moyens d'intégration 30, 31 des signaux redressés, ces moyens d'intégration étant suivis de soustracteurs 60, 61 fournissant respectivement des signaux E1 et E2 proportionnels à l'amplitude de l'erreur de balance du modulateur.

Dans une variante de réalisation, les moyens de redressement 28A et 29A peuvent respectivement être remplacés par les moyens de redressement 28B et 29B des signaux X et Y appliqués à l'estimateur 24.

Les soustracteurs 60 et 61 reçoivent respectivement des signaux de référence analogiques REF1 et REF2, généralement identiques (REF1 = REF2), les signaux de sortie des moyens d'intégration 30, 31 étant soustraits de REF1 et REF2 respectivement. A titre d'exemple, REF1 et REF2 sont par exemple égaux à deux fois l'amplitude moyenne du signal modulé S.

De manière générale, les soustracteurs 60 et 61 n'ont besoin d'être utilisés que lorsqu'une correction de l'erreur de balance est mise en oeuvre.

En cas de correction de ce défaut de balance, les signaux E1 et E2 sont respectivement appliqués aux multiplieurs 50 et 51 placés en amont des mélangeurs 21 et 20 respectivement pour corriger les offsets introduits par ces mélangeurs.

Les signaux E1 et E2 peuvent également être appliqués à des moyens de soustraction (non représentés), fournissant un signal E = E1-E2 (ou E2-E1), ce signal E étant également indicatif du défaut de balance du modulateur. Le signal E peut être appliqué à un multiplieur placé en amont d'un des mélangeurs 20, 21.

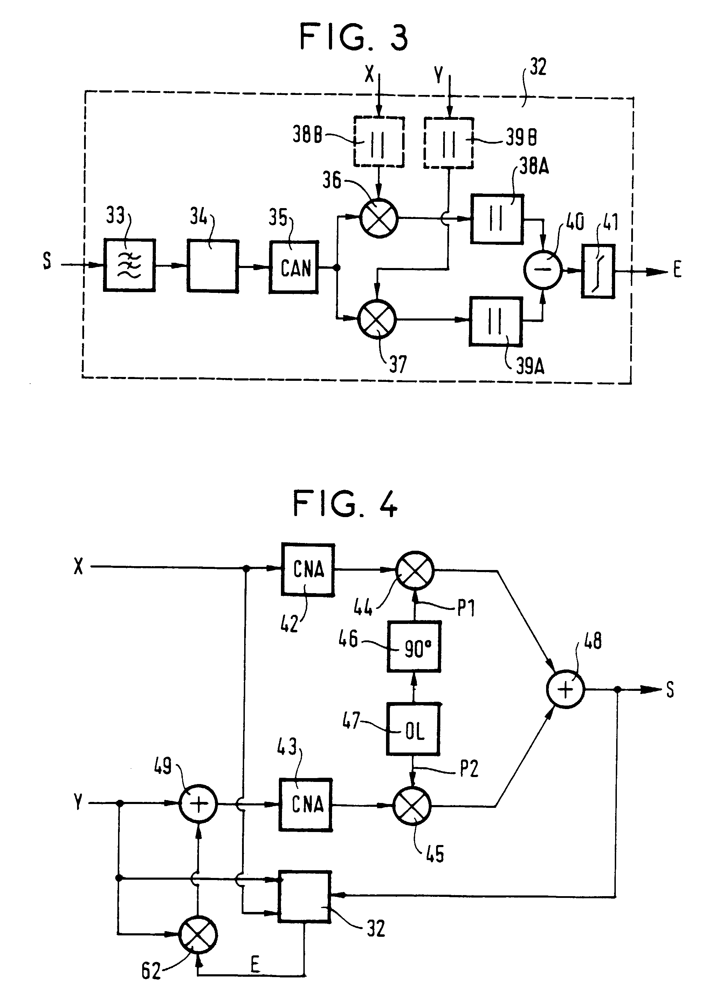

La figure 3 représente un autre mode de réalisation d'un estimateur d'un défaut de balance selon l'invention. Dans ce mode de réalisation, l'estimateur est essentiellement de type numérique et référencé 32.

Le signal modulé S issu du modulateur en quadrature est appliqué à des moyens 33 de détection de la puissance instantanée du signal modulé S. Ces moyens de détection fournissent l'enveloppe du signal modulé S à un filtre passe-bas 34 suivi par un convertisseur analogique-numérique 35 fonctionnant à une fréquence égale à n/Ts, avec Ts le temps symbole et n au moins égal à 2. L'enveloppe numérisée est appliquée à des moyens de multiplication 36, 37 recevant par ailleurs les signaux modulants X et Y. Les signaux produits sont appliqués à des circuits de valeur absolue 38A, 39A constituant des moyens de redressement des signaux produits. Les signaux issus des circuits 38A, 39A sont appliqués à un soustracteur 40 et le signal différence résultant est appliqué à des moyens d'accumulation 41 fournissant un signal E indicatif du défaut de balance du modulateur.

Bien entendu, les signaux issus des circuits de valeur absolue 38A et 39A peuvent également être accumulés sans être soustraits, les résultats de ces accumulations constituant alors deux signaux d'estimation de défaut de balance appliqués chacun à un mélangeur du modulateur en quadrature.

De même que précédemment, une variante de réalisation consiste à remplacer les moyens de redressement 38A et 39A par des moyens de redressement 38B et 39B agissant directement sur les signaux modulants X et Y appliqués à l'estimateur 32.

Le signal E précité peut être exploité pour la correction du modulateur en quadrature comme expliqué ci-après en regard de la figure 4 qui représente un autre modulateur en quadrature pouvant être piloté par un estimateur d'erreur de balance.

Sur cette figure, les signaux modulants X et Y sont classiquement appliqués à un étage de modulation comprenant des convertisseurs numériques-analogiques (CNA) 42, 43 dont les signaux de sortie sont appliqués à des mélangeurs 44, 45 recevant des signaux porteurs P1, P2 en quadrature de phase. Les signaux porteurs P1 et P2 sont obtenus en déphasant de 90° (déphaseur 46) le signal de sortie d'un oscillateur local 47. Les signaux de sortie des mélangeurs 44, 45 sont additionnés dans un sommateur 48 pour constituer un signal modulé S apte à être transmis.

Le modulateur en quadrature coopère avec l'estimateur 32 recevant les signaux modulants X et Y, ainsi que le signal modulé S. L'estimateur 32 fournit le signal E relatif au défaut de balance du modulateur, ce signal E étant appliqué à un multiplieur 62 recevant l'un des signaux modulants (ici le signal Y), le signal de sortie de ce multiplieur 62 étant sommé (sommateur 49) à ce signal modulant.

Les estimateurs décrits précédemment sont plus particulièrement destinés à être associés à un étage de modulation fonctionnant à un débit numérique et à une fréquence de signal porteur variables. Bien entendu, leur intérêt est également important dans le cas d'un modulateur fonctionnant à fréquence fixe, pour compenser des variations de caractéristiques du modulateur dues par exemple à des variations de température ou au vieillissement.

L'invention s'applique notamment aux modulateurs utilisés dans les transmissions par faisceaux hertziens ou par satellites.

## Revendications

1. Estimateur (24, 32) du défaut de balance d'un modulateur en quadrature comprenant deux mélangeurs (20, 21, 44, 45) auxquels sont appliqués deux signaux porteurs (P1, P2) ainsi qu'à chacun desdits mélangeurs (20, 21, 44, 45) un signal modulant (X, Y), les signaux de sortie desdits mélangeurs (20, 21, 44, 45) étant appliqués à un sommateur (23, 48) pour constituer un signal modulé (S),
caractérisé en ce qu'il comporte :
- des moyens (25, 33) de détection de la puissance instantanée dudit signal modulé (S) ;
- des moyens de multiplication (26, 27, 36, 37) de ladite puissance instantanée détectée (P_{d}) par lesdits signaux modulants (X, Y), lesdits moyens de multiplication (26, 27, 36, 37) fournissant des signaux produits ;
- des moyens de redressement (28A, 29A, 38A, 39A) desdits signaux produits ;
- des moyens d'intégration (30, 31) desdits signaux produits redressés fournissant des signaux (E1, E2) indicatifs dudit défaut de balance dudit modulateur.

2. Estimateur (24, 32) du défaut de balance d'un modulateur en quadrature comprenant deux mélangeurs (20, 21, 44, 45) auxquels sont appliqués deux signaux porteurs (P1, P2) ainsi qu'à chacun desdits mélangeurs (20, 21, 44, 45) un signal modulant (X, Y), les signaux de sortie desdits mélangeurs (20, 21, 44, 45) étant appliqués à un sommateur (23, 48) pour constituer un signal modulé (S),
caractérisé en ce qu'il comporte :
- des moyens (25, 33) de détection de la puissance instantanée dudit signal modulé (S) ;
- des moyens de multiplication (26, 27, 36, 37) de ladite puissance instantanée détectée (P_{d}) par les valeurs absolues desdits signaux modulants (X, Y), lesdits moyens de multiplication (26, 27, 36, 37) fournissant des signaux produits redressés ;
- des moyens d'intégration (30, 31) desdits signaux produits redressés fournissant des signaux (E1, E2) indicatifs dudit défaut de balance dudit modulateur.

3. Estimateur selon l'une des revendications 1 et 2, caractérisé en ce que lesdits signaux (E1, E2) indicatifs dudit défaut de balance dudit modulateur sont appliqués à des moyens de soustraction (40) fournissant un signal unique (E) indicatif dudit défaut de balance dudit modulateur.

4. Estimateur (24, 32) du défaut de balance d'un modulateur en quadrature comprenant deux mélangeurs (20, 21, 44, 45) auxquels sont appliqués deux signaux porteurs (P1, P2) ainsi qu'à chacun desdits mélangeurs (20, 21, 44, 45) un signal modulant (X, Y), les signaux de sortie desdits mélangeurs (20, 21, 44, 45) étant appliqués à un sommateur (23, 48) pour constituer un signal modulé (S),
caractérisé en ce qu'il comporte :
- des moyens (25, 33) de détection de la puissance instantanée dudit signal modulé (S) ;
- des moyens de multiplication (26, 27, 36, 37) de ladite puissance instantanée détectée (P_{d}) par lesdits signaux modulants (X, Y), lesdits moyens de multiplication (26, 27, 36, 37) fournissant des signaux produits ;
- des moyens de redressement (28A, 29A, 38A, 39A) desdits signaux produits ;
- des moyens d'intégration (30, 31) de la différence des signaux produits redressés fournissant un signal unique (E) indicatif dudit défaut de balance dudit modulateur.

5. Estimateur (24, 32) du défaut de balance d'un modulateur en quadrature comprenant deux mélangeurs (20, 21, 44, 45) auxquels sont appliqués deux signaux porteurs (P1, P2) ainsi qu'à chacun desdits mélangeurs (20, 21, 44, 45) un signal modulant (X, Y), les signaux de sortie desdits mélangeurs (20, 21, 44, 45) étant appliqués à un sommateur (23, 48) pour constituer un signal modulé (S),
caractérisé en ce qu'il comporte :
- des moyens (25, 33) de détection de la puissance instantanée dudit signal modulé (S) ;
- des moyens de multiplication (26, 27, 36, 37) de ladite puissance instantanée détectée (P_{d}) par les valeurs absolues desdits signaux modulants (X, Y), lesdits moyens de multiplication (26, 27, 36, 37) fournissant des signaux produits redressés ;
- des moyens d'intégration (30, 31) de la différence des signaux produits redressés fournissant un signal unique (E) indicatif dudit défaut de balance dudit modulateur.

6. Modulateur en quadrature, caractérisé en ce qu'il coopère avec un estimateur (24, 32) selon l'une des revendications 1 à 5.
